# EUROPEAN PATENT SPECIFICATION

(11) **EP 3 058 029 B1**
(45) Date of publication and mention of the grant of the patent: **22.11.2017**
(21) Application number: 14789747.4
(22) Date of filing: 16.10.2014
(51) Int. Cl.: C08L 23/16, C08F 255/04, C08F 255/06

(54) **DOUBLE COMPONENT SYSTEM FOR POLYOLEFIN COMPATIBILIZATION**
DOPPELKOMPONENTENSYSTEM ZUR POLYOLEFINKOMPATIBILISIERUNG
SYSTÈME À DEUX COMPOSANTS POUR COMPATIBILISATION DE POLYOLÉFINES

(30) Priority: 16.10.2013 US 201361891777 P; 17.10.2013 US 201361892292 P
(43) Date of publication of application: 24.08.2016
(73) Proprietor: E. I. du Pont de Nemours and Company, Wilmington, DE 19805 (US)
(72) Inventor: ROLLAND, Loic, Pierre, 01220 Divonne les Bains (FR); ANDRE, Jacques, 74100 Vetraz Monthoux (FR)
(74) Representative: Dannenberger, Oliver Andre
(86) International application number: PCT/US2014/060850
(87) International publication number: WO 2015/057935

(56) References cited:
- EP-A1- 1 142 918
- EP-A1- 1 710 288
- WO-A1-94/13763

## Description

This application claims priority to US provisional applications 61/891777, filed 10/16/2013 and 61/892292, filed 10/17/2013; the entire disclosures of which are incorporated herein by reference.

### FIELD OF THE INVENTION

The present invention relates to the field of polyolefin blends compatibilization and in particular to reactive compatibilization of polyethylene/polypropylene blends.

### BACKGROUND OF THE INVENTION

When investigating the market of plastics recycling, it appears that among the largest streams of polymer wastes, polypropylene (PP) contaminated with polyethylene (PE) and polyethylene contaminated with polypropylene are the main ones.

However, since these two polymers are not compatible with each other, properties, e.g. impact resistance, of recycled products based on their combination are mediocre and therefore limit their usage to non-demanding and low-value applications.

The use of compatibilizers aims to improve significantly the mechanical properties of the PP/PE blends.

So far, most common technologies known to compatibilize polymers are based on adding small amounts of a polymer having an intermediate polarity level, i.e. in between polarity levels of the polymers to compatibilize. Another method consists of using a compatibilizer being compatible with one of the polymer to compatibilize and being reactive with the other one(s). Another method consists in using a compatibilizer capable of reducing interfacial tensions in the two-phase systems formed by the non-compatible polymers.

However, these techniques do not seem to be effective enough for compatibilization of PP/PE based recycled products.

Therefore, there is still a need for a compatibilization system that would improve the mechanical properties, in particular the impact resistance or impact strength, of PP/PE blends.

### SUMMARY OF THE INVENTION

Described herein is a recycled thermoplastic composition comprising or produced from
a) a blend of polypropylene and polyethylene, the blend can be obtained from polymer waste,
b) an ethylene epoxide copolymer and
c) an ethylene/propylene copolymer grafted or copolymerized with a carboxylic acid or a derivative thereof.

Preferably, the amount of components b) and c) in the recycled thermoplastic composition is in the range of between 2 to 10 weight percent, based on the total weight of the composition, even more preferably, the amount of components b) and c) is 5 weight percent, based on the total weight of the composition.

Preferred component b) is ethylene glycidyl methacrylate (EGMA) and preferred component c) is an ethylene/propylene copolymer rubber grafted or copolymerized with a carboxylic acid or a derivative thereof. More preferably, component c) is an ethylene/propylene rubber grafted with maleic anhydride.

In one embodiment, the ratio of ethylene glycidyl methacrylate to ethylene/propylene rubber grafted with maleic anhydride is between 0.5:3.5 and 1:1.

Also disclosed is the use of a mixture comprising:
a) an ethylene epoxide copolymer and
b) an ethylene/propylene copolymer grafted or copolymerized with a carboxylic acid or a derivative thereof,
for recycling waste materials comprising a blend of polyethylene and polypropylene.

Also disclosed is a process for recycling blends of polyethylene and polypropylene, said process comprising the steps of:
a) providing a blend of polypropylene and polyethylene
b) providing a mixture of an ethylene epoxide copolymer and an ethylene/propylene copolymer grafted or copolymerized with a carboxylic acid or a derivative thereof and
c) melt blending components a) and b).

Articles made from the recycled thermoplastic resin of the invention are also disclosed. Preferred articles selected from the group consisting of molded part, sheet, film, pipe, profile, packaging for detergents and chemicals, bottles, containers, jerrycans, drums, flower pots, automotive parts, crates, road signs, gasoline and diesel tanks, storage and transport tanks, and intermediate bulk containers.

### DETAILED DESCRIPTION

### Definitions

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "acrylate" means an ester of acrylic acid with an alkyl group. Preferred in the invention are acrylates with alkyl groups having 1 to 4 carbon atoms.

As used herein, the term "(meth)acrylic acid" refers to methacrylic acid and/or acrylic acid, inclusively. Likewise, the term "(meth)acrylate" means methacrylate and/or acrylate and "poly(meth)acrylate" means polymers derived from the polymerization of either or a mixture of both corresponding type of monomers.

As used herein, the term "terpolymer" means that the copolymer has at least three different comonomers.

### Polyethylene/Polypropylene blends

As used herein the term "polyethylene" refers to homopolymers of ethylene as well as copolymers of polyethylene which can contain about 1 to about 20 weight percent of an alpha olefin comonomer of 4 to 16 carbon atoms.

Polyethylenes suitable for use in the present invention may be for example, high density polyethylenes, low density polyethylenes, very low density polyethylenes, linear low density polyethylenes, medium density polyethylenes or ultrahigh density polyethylenes, and blends or mixtures thereof, any of which may be branched or unbranched.

As used herein the term "polypropylene" refers to homopolymers of propylene as well as copolymers of polypropylene which can contain about 1 to about 20 weight percent ethylene or an alpha olefin comonomer of 4 to 16 carbon atoms. Blends or mixtures of homopolymers and copolymers are also included. The polypropylene can be atactic; alternatively, it can be highly crystalline isotactic or syndiotactic polypropylene. The copolymer can be either a random or block copolymer.

The Polyethylene/polypropylene blends can be obtained by blending virgin polyethylene or polypropylene or can be obtained from polymeric waste.

### Ethylene epoxide copolymers

Ethylene epoxide copolymers of the present invention are ethylene copolymers that are functionalized with epoxy groups. By "functionalized", it is meant that the groups are grafted and/or copolymerized with organic functionalities. Examples of epoxides used to functionalize copolymers are unsaturated epoxides comprising from four to eleven carbon atoms, such as glycidyl(meth)acrylate, allyl glycidyl ether, vinyl glycidyl ether and glycidyl itaconate, glycidyl(meth)acrylates (GMA) being particularly preferred. Ethylene epoxide copolymers preferably contain from 0.05 to 15 weight percent of epoxy groups, the weight percentage being based on the total weight of the ethylene epoxide copolymer. Preferably, epoxides used to functionalize ethylene copolymers are glycidyl(meth)acrylates. In a preferred embodiment, the ethylene epoxide copolymers preferably contain from 0.05 to 15 weight percent of copolymerized glycidyl methacrylate. In another preferred embodiment, the epoxy-functionalized comonomer is not a glycidyl(meth)acrylate and the number of epoxy groups in the ethylene epoxide copolymer is equivalent to the number of epoxy groups in an otherwise identical ethylene epoxide copolymer that comprises 0.05 to 15 weight percent of copolymerized glycidyl methacrylate.

Particularly preferred ethylene epoxide copolymer is ethylene glycidyl methacrylate (EGMA).

The ethylene/glycidyl(meth)acrylate copolymer may further contain copolymerized units of an alkyl(meth)acrylate having from one to six carbon atoms and an α-olefin having 1-8 carbon atoms. Representative alkyl(meth)acrylates include methyl(meth)acrylate, ethyl(meth)acrylate, propyl(meth)acrylate, butyl(meth)acrylate, isobutyl(meth)acrylate, hexyl(meth)acrylate, or combinations of two or more thereof. Of note are methyl acrylate, ethyl acrylate and butyl acrylate. Ethylene epoxide copolymers are preferably selected from terpolymers of ethylene, butylacrylate (BA) and glycidylmethacrylate (GMA), wherein the three components are present in at or about the following weight percentages: ethylene 50-98 weight percent, BA 1-40 weight percent, and GMA 1-15 weight percent. Particularly preferred is a terpolymer having the following composition: ethylene 55-88 weight percent, BA 10-35 weight percent, and GMA 2-10 weight percent. Suitable ethylene epoxide copolymers are commercially available under the trademark Elvaloy® or Entira Bond® from E. I. du Pont de Nemours and Company, Wilmington, Delaware.

### Ethylene/propylene copolymer grafted or copolymerized with a carboxylic acid or a derivative

The ethylene/propylene copolymer of the present invention is a copolymer of ethylene and propylene, wherein ethylene is present in an amount at or about 40 to 80 weight percent and propylene at or about 20 to 60 weight percent, based on the total weight of the copolymer. Such polymer is often referred to as Ethylene Propylene Rubber (EPR or EPM with E referring to ethylene, P to propylene and M to its classification in ASTM standard D-1418 since the M class includes rubbers having a saturated chain of the polymethylene type).

The ethylene/propylene copolymer main further include the Ethylene Propylene Diene terpolymers (EPDM with the M referring to the above ASTM classification), wherein the ethylene is present in an amount at or about 40 to 80 weight percent, propylene in an amount at or about 20 to 60 weight percent and diene in an amount at or about 2 to 12 weight percent, based on the total weight of the terpolymer. Suitable dienes used for the production of EPDM include without limitation dicyclopentadiene (DCPD), ethylidene norbornene (ENB), vinyl norbornene (VNB), and combinations of two or more of these dienes.

The ethylene/propylene copolymer of the present invention is functionalized by copolymerizing or grafting a carboxylic acid or derivative thereof (such as an anhydride) to the polymer by known processes. Any of the above-described ethylene/propylene copolymers can be subject to the functionalizing process. Preferred is an ethylene/propylene copolymer rubber grafted or copolymerized with a carboxylic acid or a derivative thereof.

An ethylene/propylene copolymer is graft modified with 0.01 to 10.0 weight percent of a carboxylic acid or a derivative thereof. The grafting of the ethylene/propylene copolymer can be carried out in the melt state, in solution or in suspension as described in the state-of-the-art literature. Maleic anhydride is the preferred functionalizing agent.

The grafting monomer for the ethylene/propylene copolymer is at least one of alpha, beta-ethylenically unsaturated carboxylic acids and anhydrides, including derivatives of such acids and anhydrides, and including mixtures thereof. Examples of the acids and anhydrides, which may be mono-, di-or polycarboxylic acids, are acrylic acid, methacrylic acid, maleic acid, fumaric acid, itaconic acid, crotonic acid, itaconic anhydride, maleic anhydride and substituted maleic anhydride e.g. dimethyl maleic anhydride. Examples of derivatives of the unsaturated acids are salts, amides, imides and esters e.g. mono-and disodium maleate, acrylamide, maleimide and diethyl fumarate. Maleic anhydride is preferred.

Particularly preferred is an ethylene/propylene copolymer rubber grafted with maleic anhydride.

In addition to its polymer components, the composition of the present invention can be blended with common additives such as reinforcing and non-reinforcing fillers, flame retardant fillers, magnesium hydroxide, aluminium trihydrate, antioxidants, UV stabilizers, lubricants (e.g., oleamide), antiblocking agents, antistatic agents, waxes, coupling agents for fillers, pigments, titanium dioxide, talc and other processing aids (e.g., zinc stearate) known in the polymer compounding art. The pigments and other additives may comprise up to about 70 weight percent of the total composition based on polymer components plus additives (the polymer components being present in amounts with respect to each other in the proportions previously specified); preferably pigments and fillers comprise above 0 to about 70 weight percent of the total composition.

In one embodiment, the present invention provides for a process to compatibilize polyethylene/polypropylene blends that can be obtained from polymer waste, said process comprising the steps of:
a) providing a blend of polypropylene and polyethylene
b) providing a mixture of an ethylene epoxide copolymer and an ethylene/propylene copolymer grafted or copolymerized with a carboxylic acid or a derivative thereof and
c) melt blending components a) and b).

The thermoplastic polymer composition of the present invention are generally prepared by melt mixing or melt blending the polymeric components and optional additives under high shear conditions by use of conventional masticating equipment, for example, a rubber mill, Brabender Mixer, Banbury Mixer, Buss-ko kneader, Farrel continuous mixer or twin screw continuous mixer. Mixing times should be sufficient to obtain homogeneous blends and reaction between the ethylene epoxide copolymer and the ethylene/propylene copolymer grafted or copolymerized with a carboxylic acid or a derivative. Satisfactory mixing times depend upon the type of mixing equipment (shear intensity). Typically, mixing times of about 5 minutes are satisfactory on a batch mixer (Banbury) while 1.5-2 minutes are satisfactory on a continuous mixer (Brabender, Buss ko-kneader, Farrel or twin screws). If the polymer blend is obviously non-homogeneous, additional mixing is required.

A mixture comprising an ethylene epoxide copolymer, as described above, and an ethylene/propylene copolymer grafted or copolymerized with a carboxylic acid, as described above, can be used to compatibilize polymer blends made of polyethylene and polypropylene. In particular, the mixture can be used for recycling waste materials or waste polymers comprising a blend of polyethylene and polypropylene. The amount of ethylene epoxide copolymer and ethylene/propylene copolymer grafted or copolymerized with a carboxylic acid or derivative thereof is in the range of between 2 to 10 weight percent, based on the total weight of the composition, i.e. the weight of the mixture plus the weight of the blend of polyethylene/polypropylene.

Preferably, the amount of ethylene epoxide copolymer and ethylene/propylene copolymer grafted or copolymerized with a carboxylic acid or derivative thereof is 4 to 5 weight percent, even more preferably 5 weight percent, based on the total weight of the composition. Preferably, the ethylene epoxide copolymer is ethylene glycidyl methacrylate (EGMA) and the ethylene/propylene copolymer grafted or copolymerized with a carboxylic acid or derivative thereof is ethylene/propylene rubber grafted with maleic anhydride. More preferably the ratio of ethylene glycidyl methacrylate to ethylene/propylene rubber grafted with maleic anhydride is between 0.5 to 3.5 and 1 to 3, preferably between 0.5 to 3.5 and 1 to 1.

The thermoplastic compositions of the present invention may be thermoformed into a variety of articles and in particular in articles selected from the group consisting of sheet, film, pipe, profile, packaging for detergents and chemicals, bottles, containers, jerrycans, drums, flower pots, automotive parts, crates, road signs, gasoline and diesel tanks, storage and transport tanks, and intermediate bulk containers.

### EXAMPLES

### Example 1 (E1)

A composition comprising :
1 weight percent of granules of ethylene glycidyl methacrylate copolymer.
3 weight percent of granules of ethylene/propylene copolymer comprising between 40 and 80 weight percent ethylene and between 20 and 60 weight percent propylene (density 0.87 g/cm3) grafted with 0.9 weight percent of maleic anhydride, the weight percent being based on the total weight of the polymer.
96 weight percent of granules of recycled polypropylene contaminated with some polyethylene, commercially available from Galloo Plastics SA under the trade name GP-PP-88
has been melt blended in a double screw extruder to reach a melt temperature of 250°C before granulation. The produced granules of this blend have then been injection molded at a melt temperature of 190°C into bars for measurement of Notched Charpy impact strength according to ISO 179 1eA.

Charpy impact strength was then measured at 23°C on above samples, according to method ISO 179 1 eA.

The results are shown in Table 1.

### Comparative Example 2 (CE2)

Charpy impact strength was measured at 23°C according to method ISO 179 1 eA on bars made of granules of recycled polypropylene contaminated with some polyethylene, commercially available from Galloo Plastics SA under the trade name GP-PP-88. No compatibilizers were used.

The results are shown in Table 1.

### Comparative Example 3 (CE3)

Example 1 was repeated using a composition comprising :
4 weight percent of granules of ethylene/propylene copolymer (density 0.862 g/cm3), commercially available from ExxonMobil Chemical Company under the trade name Vistamax™ 6102
96 weight percent of granules of recycled polypropylene contaminated with some polyethylene, commercially available from Galloo Plastics SA under the trade name GP-PP-88

The results are shown in Table 1.

### Comparative Example 4 (CE4)

Example 1 was repeated using a composition comprising :
1 weight percent of granules of ethylene glycidyl methacrylate copolymer.
3 weight percent of granules of polypropylene random copolymer comprising less than 10 weight percent ethylene and more than 90 weight percent propylene (density 0.90 g/cm3) grafted with 0.75 weight percent of maleic anhydride, the weight percent being based on the total weight of the polymer.
96 weight percent of granules of recycled polypropylene contaminated with some polyethylene, commercially available from Galloo Plastics SA under the trade name GP-PP-88.

The results are shown in Table 1.

In Table 1, it is shown that the addition of 4 weight percent of the compatibilization system of the present invention (1 weight percent of ethylene glycidyl methacrylate plus 3 weight percent of ethylene/propylene copolymer grafted with maleic anhydride) allows an increase in Charpy impact strength of the recycled material from 8.3 KJ/m2 to 19.7 KJ/m2 (+ 137 %) while 4 weight percent of a commercially available compatibilizer (ethylene/propylene copolymer) allows an increase in Charpy impact strength of the recycled material from only 8.3 KJ/m2 to 12.6 KJ/m2 (+ 51 %) and 1 weight percent of ethylene glycidyl methacrylate copolymer plus 3 weight percent of polypropylene random copolymer grafted with maleic anhydride allows an increase in Charpy impact strength of the recycled material from only 8.3 KJ/m2 to 9.2 KJ/m2 (+ 11 %).

**Table 1**

| | E1 | CE2 | CE3 | CE4 |
|---|---|---|---|---|
| Notched Charpy impact strength at 23 °C according to ISO 179 1eA (KJ/m2) | 19.7 | 8.3 | 12.6 | 9.2 |

## Claims

1. A thermoplastic composition comprising
a) a blend of polypropylene and polyethylene,
b) an ethylene epoxide copolymer, and
c) an ethylene/propylene copolymer grafted or copolymerized with a carboxylic acid or a derivative thereof.

2. The thermoplastic composition of claim 1 wherein the amount of components b) and c) is in the range of between 2 to 10 weight percent, based on the total weight of the composition.

3. The thermoplastic composition of claim 1 or 2 wherein the amount of components b) and c) is 5 weight percent, based on the total weight of the composition.

4. The thermoplastic composition of any one of claims 1 to 3 wherein component b) is ethylene glycidyl methacrylate.

5. The thermoplastic composition of any one of claims 1 to 4 wherein component c) is an ethylene/propylene copolymer rubber grafted or copolymerized with a carboxylic acid or a derivative thereof.

6. The thermoplastic composition of claim 5 wherein component c) is an ethylene/propylene copolymer rubber grafted with maleic anhydride.

7. The thermoplastic composition of claim 6 wherein component b) is ethylene glycidyl methacrylate and wherein the ratio of ethylene glycidyl methacrylate to ethylene/propylene copolymer rubber grafted with maleic anhydride is 0.5:3.5 to 1:1.

8. A process comprising
blending a) an ethylene epoxide copolymer and b) an ethylene/propylene copolymer grafted or copolymerized with a carboxylic acid or a derivative thereof to produce a mixture;
contacting the mixture with a blend of polyethylene and polypropylene.

9. The process of claim 8 wherein the contacting is melt-blending the mixture and the blend of polypropylene and polyethylene under a condition effective to compatibilize the polyethylene and polypropylene.

10. The process of claim 8 or 9 wherein the blend of polyethylene and polypropylene is obtained from polymer waste and component a) is ethylene glycidyl methacrylate and the contacting is under a condition effective to recover the polyethylene and polypropylene from the blend of polyethylene and polypropylene.

11. The process of any one of claims 8 to 10 wherein component b) is an ethylene/propylene copolymer rubber grafted with maleic anhydride.

12. The process of claim 11 wherein component a) is ethylene glycidyl methacrylate and wherein the ratio of ethylene glycidyl methacrylate to ethylene/propylene copolymer rubber grafted with maleic anhydride is 0.5:3.5 to 1:1.

13. The process of any one of claims 8 to 12 wherein the amount of components a) and b) is in the range of between 2 to 10 weight percent, preferably is 5 weight percent, based on the total weight of the composition.

14. An article comprising or produced from a thermoplastic composition as recited in any one of claims 1 to 7, or obtained by the process of any one of claims 8 to 13.

15. The article of claim 14 wherein the article is selected from the group consisting of molded part, sheet, film, pipe, profile, packaging for detergents and chemicals, bottles, containers, jerrycans, drums, flower pots, automotive parts, crates, road signs, gasoline and diesel tanks, storage and transport tanks, and intermediate bulk containers.

## Patentansprüche

1. Thermoplastische Zusammensetzung umfassend
a) eine Mischung von Polypropylen und Polyethylen,
b) ein Ethylenepoxidcopolymer und
c) ein Ethylen-Propylen-Copolymer, das mit einer Carbonsäure oder einem Derivat davon gepfropft oder copolymerisiert ist.

2. Thermoplastische Zusammensetzung nach Anspruch 1, wobei die Menge der Komponenten b) und c) im Bereich zwischen 2 und 10 Gewichtsprozent, auf das Gesamtgewicht der Zusammensetzung bezogen, liegt.

3. Thermoplastische Zusammensetzung nach Anspruch 1 oder 2, wobei die Menge der Komponenten b) und c) 5 Gewichtsprozent, auf das Gesamtgewicht der Zusammensetzung bezogen, beträgt.

4. Thermoplastische Zusammensetzung nach einem der Ansprüche 1 bis 3, wobei die Komponente b) Ethylen-Glycidylmethacrylat ist.

5. Thermoplastische Zusammensetzung nach einem der Ansprüche 1 bis 4, wobei die Komponente c) ein Ethylen-Propylen-Copolymerkautschuk ist, der mit einer Carbonsäure oder einem Derivat davon gepfropft oder copolymerisiert ist.

6. Thermoplastische Zusammensetzung nach Anspruch 5, wobei die Komponente c) ein Ethylen-Propylen-Copolymerkautschuk ist, der mit Maleinsäureanhydrid gepfropft ist.

7. Thermoplastische Zusammensetzung nach Anspruch 6, wobei die Komponente b) Ethylen-Glycidylmethacrylat ist und wobei das Verhältnis von Ethylen-Glycidylmethacrylat zu dem Ethylen-Propylen-Copolymerkautschuk, der mit Maleinsäureanhydrid gepfropft ist, 0,5:3,5 bis 1:1 beträgt.

8. Verfahren umfassend
das Mischen von a) einem Ethylenepoxidcopolymer und b) einem Ethylen-Propylen-Copolymer, das mit einer Carbonsäure oder einem Derivat davon gepfropft oder copolymerisiert ist, um eine Mischung herzustellen;
das Kontaktieren des Gemisches mit einer Mischung von Polyethylen und Polypropylen.

9. Verfahren nach Anspruch 8, wobei das Kontaktieren das Schmelzmischen des Gemisches und der Mischung von Polypropylen und Polyethylen unter einer Bedingung ist, die zum Verträglichmachen des Polyethylens und Polypropylens wirksam ist.

10. Verfahren nach Anspruch 8 oder 9, wobei die Mischung von Polyethylen und Polypropylen aus Polymerabfallprodukt erhalten wird und die Komponente a) Ethylen-Glycidylmethacrylat ist und das Kontaktieren unter einer Bedingung erfolgt, die wirksam ist, um das Polyethylen und Polypropylen aus der Mischung von Polyethylen und Polypropylen zu gewinnen.

11. Verfahren nach einem der Ansprüche 8 bis 10, wobei die Komponente b) ein Ethylen-Propylen-Copolymerkautschuk ist, der mit Maleinsäureanhydrid gepfropft ist.

12. Verfahren nach Anspruch 11, wobei die Komponente a) Ethylen-Glycidylmethacrylat ist und wobei das Verhältnis von Ethylen-Glycidylmethacrylat zu dem Ethylen-Propylen-Copolymerkautschuk, der mit Maleinsäureanhydrid gepfropft ist, 0,5:3,5 bis 1:1 beträgt.

13. Verfahren nach einem der Ansprüche 8 bis 12, wobei die Menge der Komponenten a) und b) im Bereich zwischen 2 und 10 Gewichtsprozent, auf das Gesamtgewicht der Zusammensetzung bezogen, liegt, bevorzugt 5 Gewichtsprozent beträgt.

14. Artikel umfassend oder hergestellt aus einer thermoplastischen Zusammensetzung wie in einem der Ansprüche 1 bis 7 aufgeführt oder der durch das Verfahren nach einem der Ansprüche 8 bis 13 erhalten wird.

15. Artikel nach Anspruch 14, wobei der Artikel aus der Gruppe ausgewählt ist bestehend aus einem geformten Teil, einer Platte, Folie, Röhre, einem Profil, einer Verpackung für Detergentien und Chemikalien, Flaschen, Behältern, Kanistern, Fässern, Blumentöpfen, Fahrzeugteilen, Kisten, Straßenschildern, Benzin- und Dieseltanks, Speicher-und Transporttanks und Großzwischenbehältern.

## Revendications

1. Composition thermoplastique comprenant
a) un mélange de polypropylène et de polyéthylène,
b) un copolymère d'époxyde d'éthylène, et
c) un copolymère d'éthylène/propylène greffé ou copolymérisé avec un acide carboxylique ou un dérivé de celui-ci.

2. Composition thermoplastique selon la revendication 1, la quantité des composants b) et c) se situant dans la plage comprise entre 2 à 10 pour cent en poids, sur la base du poids total de la composition.

3. Composition thermoplastique selon la revendication 1 ou 2, la quantité des composants b) et c) étant de 5 pour cent en poids, sur la base du poids total de la composition.

4. Composition thermoplastique selon l'une quelconque des revendications 1 à 3, le composant b) étant l'éthylène-méthacrylate de glycidyle.

5. Composition thermoplastique selon l'une quelconque des revendications 1 à 4, le composant c) étant un caoutchouc copolymère d'éthylène/propylène greffé ou copolymérisé avec un acide carboxylique ou un dérivé de celui-ci.

6. Composition thermoplastique selon la revendication 5, le composant c) étant un caoutchouc copolymère d'éthylène/propylène greffé avec de l'anhydride maléique.

7. Composition thermoplastique selon la revendication 6, le composant b) étant l'éthylène-méthacrylate de glycidyle et le rapport de l'éthylène-méthacrylate de glycidyle au caoutchouc copolymère d'éthylène/propylène greffé avec de l'anhydride maléique étant de 0,5:3,5 à 1:1.

8. Procédé comprenant
le mélange a) d'un copolymère d'époxyde d'éthylène et b) d'un copolymère d'éthylène/propylène greffé ou copolymérisé avec un acide carboxylique ou un dérivé de celui-ci pour produire un mélange;
la mise en contact du mélange avec un mélange de polyéthylène et de polypropylène.

9. Procédé selon la revendication 8, la mise en contact étant le mélange à l'état fondu du mélange et le mélange du polypropylène et du polyéthylène sous une condition efficace pour assurer la compatibilité du polyéthylène et du polypropylène.

10. Procédé selon la revendication 8 ou 9, le mélange de polyéthylène et de polypropylène étant obtenu à partir de déchet de polymère et le composant a) étant de l'éthylène-méthacrylate de glycidyle et la mise en contact s'effectuant sous une condition efficace pour récupérer le polyéthylène et le polypropylène du mélange de polyéthylène et de polypropylène.

11. Procédé selon l'une quelconque des revendications 8 à 10, le composant b) étant un caoutchouc copolymère d'éthylène/propylène greffé avec de l'anhydride maléique.

12. Procédé selon la revendication 11, le composant a) étant de l'éthylène-méthacrylate de glycidyle et le rapport de l'éthylène-méthacrylate de glycidyle au caoutchouc copolymère d'éthylène/propylène greffé avec de l'anhydride maléique étant de 0,5:3,5 à 1:1.

13. Procédé selon l'une quelconque des revendications 8 à 12, la quantité des composants a) et b) se situant dans la plage comprise entre 2 à 10 pour cent en poids, préférablement étant de 5 pour cent en poids, sur la base du poids total de la composition.

14. Article comprenant ou produit à partir d'une composition thermoplastique telle qu'énoncée selon l'une quelconque des revendications 1 à 7, ou obtenu grâce au procédé selon l'une quelconque des revendications 8 à 13.

15. Article selon la revendication 14, l'article étant sélectionné dans le groupe constitué d'une pièce moulée, d'une feuille, d'un film, d'une conduite, d'un profilé, d'un emballage pour détergents et produits chimiques, de bouteilles, de conteneurs, de jerricans, de fûts, de pots de fleur, de pièces automobiles, de caisses, de panneaux routiers, de réservoirs de gasoil et de diesel, de cuves de stockage et de transport, et de conteneurs intermédiaires de vrac.
